# EUROPEAN PATENT APPLICATION

(11) **EP 1 742 089 A1**
(43) Date of publication of application: **10.01.2007**
(21) Application number: 05728543.9
(22) Date of filing: 11.04.2005
(51) Int. Cl.: G02B 5/08, G02B 5/02, G02F 1/1335

(54) **LIGHT REFLECTING PLATE**

(30) Priority: 12.04.2004 JP 2004116746
(71) Applicant: The Furukawa Electric Co., Ltd., Chiyoda-ku, Tokyo 100-8322 (JP)
(72) Inventor: NOUSOU, Yoshiyuki c/o The Furukawa El. Co., Ltd., Chiyoda-ku, Tokyo 1008322 (JP); SUZUKI, Osamu c/o The Furukawa Electric Co., Ltd., Chiyoda-ku, Tokyo 1008322 (JP); MORITA, Nobuyuki c/o The Furukawa El. Co., Ltd., Chiyoda-ku, Tokyo 1008322 (JP); ONO, Tatsuya c/o The Furukawa Electric Co., Ltd., Chiyoda-ku, Tokyo 1008322 (JP)
(74) Representative: Grünecker, Kinkeldey, Stockmair & Schwanhäusser Anwaltssozietät
(86) International application number: PCT/JP2005/007004
(87) International publication number: WO 2005/101066

(57) **Abstract**

A technology for preventing cracks from occurring in a light reflector plate fabricated by forming a synthetic resin reflector plate into a three-dimensional shape and effectively preventing deformation of this light reflector plate is provided.

A folding groove part 6 is provided on a light-reflecting plastic film or sheet 2 by continuously or intermittently forming a groove which does not penetrate the film or sheet, along a straight line on the film or sheet. Then, the film or sheet is folded along this folding groove part.

## Description

### TECHNICAL FIELD

The present invention relates a three-dimensional light reflector plate for efficient illumination, enabling brighter and thinner backlights and illumination boxes for illumination signboards, liquid crystal display devices, lighting fixtures, and the like.

### BACKGROUND ART

Conventionally proposed light reflector plates for use in illumination signboards, liquid crystal display devices, lighting fixtures, and the like, include those fabricated such that a synthetic resin reflector plate is formed into a three-dimensional shape to thereby yield a light reflector plate (refer to, for example, Patent Reference 1).

Patent Reference 1: Japanese Patent Laid-Open Publication No. 2002-122863

### DISCLOSURE OF THE INVENTION

### PROBLEMS TO BE RESOLVED BY THE INVENTION

As the foregoing light reflector plate fabricated by forming a synthetic resin reflector plate into a three-dimensional shape, the present inventors proposed a light reflector plate fabricated by forming narrow slits, which penetrate from the front surface of one side to the front surface of the opposite side of a light-reflecting plastic film or sheet, along a straight line and folding the film or sheet along these slits.

In addition, deformation of the foregoing light reflector plate fabricated by forming a synthetic resin reflector plate into a three-dimensional shape occurs after manufacture due to strain during forming and shrinkage after forming. Therefore, as a means for preventing this deformation of the light reflector plate, the present inventors proposed adhering shape-retentive adhesive tape to the light reflector plate. In this light reflector plate, deformation is prevented due to the effect of the adhesive tape and the shape of the light reflector plate is retained.

However, in the foregoing light reflector plate fabricated by folding the film or sheet along the slits, cracking sometimes occurs in the un-cut sections between the slits when folding the film or sheet.

In addition, as described hereafter, the foregoing light reflector plate to which shape-retentive adhesive tape is adhered may have areas which are easily deformed, depending on the shape of the reflector plate, and therefore, the entire light reflector plate becomes warped due to deformation of this easily deformed area.

In light of the foregoing issues, an object of the present invention is to provide a technology for preventing cracks from occurring in a light reflector plate fabricated by forming a synthetic resin reflector plate into a three-dimensional shape, as well as effectively preventing deformation of this light reflector plate.

### MEANS OF SOLVING THE PROBLEMS

As a result of various research in order to resolve the foregoing issues, the present inventors discovered that when a groove which does not penetrate the film or sheet is formed continuously or intermittently on the film or sheet along a straight line and the film or sheet is folded along this groove, the film or sheet becomes more resistant to cracking and strain and shrinkage occurring in the folded area is reduced, thus effectively preventing deformation of the folded area.

The present invention, made based on the foregoing findings, provides a light reflector plate fabricated by forming a light-reflecting plastic film or sheet into a three-dimensional shape, wherein the film or sheet has a folding groove part created by continuously or intermittently forming a groove along a straight line and is folded along this folding groove part.

The present invention is described in further detail hereafter, In the present invention, for example, general-purpose resins such as polyethylene, polypropylene, polystyrene, polyvinylchloride (PVC), polybiphenylchloride, polyethylene terephthalate and polyvinyl alcohol, engineering plastics such as polycarbonate, polybuthylene terephthalate, polyamide, polyacetal, polyphenylene ether, ultra-high molecular weight polyethylene, polysulfone, polyethersulfone, polyphenylenesulfide, polyarlate, polyamideimide, polyetherimide, polyetheretherketone, polyimide, polytetrafluoroethylene, liquid crystal polymer and fluororesin, or copolymers and mixtures thereof are given as materials for light-reflecting plastic film or sheet. Among these, polyester, polyphenylenesulfide, polypropylene, and cyclopolyolefin are preferable due to superior heat-resistance and impact-resistance properties and the like. Antioxidant, ultraviolet inhibitor, lubricant, pigment, reinforcement and the like can be added accordingly to the resin used in the foregoing light-reflecting plastic film or sheet. In addition, a coating layer containing these additives may be applied and formed.

Specifically, preferred examples of the light-reflecting plastic film or sheet include a thermoplastic resin film or sheet having numerous fine bubbles or pores with a mean bubble diameter of 50µm therewithin, or a thermoplastic resin film or sheet containing fillers wherein numerous voids are formed with the filler as the core. In this case, in the latter film or sheet, the thermoplastic resin film or sheet containing fillers is preferably a porous stretched film or sheet, wherein numerous voids are formed with the filler as the core by forming an un-stretched film or sheet containing fillers and stretching this un-stretched film or sheet.

In the present invention, when forming the light-reflecting plastic film or sheet into a three-dimensional shape, a folding groove part created by continuously or intermittently forming a groove which does not penetrate the film or sheet along a straight line is provided in the film or sheet and the film or sheet is folded along this folding groove part. In this case, the foregoing groove can be a groove formed, for example, by performing a cutting processing or a pressing processing on the film or sheet.

In the present invention, as shown in the embodiments hereafter, a cut part or a groove can be further formed within the groove, and for example, a cut part or a groove can be further formed, continuously or intermittently, along a straight line within the groove. In this case, the foregoing cut part can be, for example, a slit with a narrow width which penetrates from the front surface of one side of the film or sheet to the front surface of the other side. If a cut part is formed intermittently along a straight line within the groove, cracking does not occur easily to the un-cut sections between the cut parts when the film or sheet is folded because the cut part is formed in a section wherein the thickness of the film or sheet is thin. In addition, the foregoing groove within the groove can be, as in the foregoing, a groove formed within the groove by performing a cutting processing or a pressing processing. In the present invention, a folding band can be formed on the film or sheet by placing a plurality of folding grooves in parallel and the film or sheet can be folded along this folding band.

In addition, in the present invention, as shown in the embodiments hereafter, the light-reflecting plastic film or sheet can be formed by stacking a plurality of light-reflecting plastic films or sheets or by laminating an aluminum plate to one surface of the light-reflecting plastic film or sheet.

Furthermore, in the present invention, as shown in the embodiments hereafter, a mountain-shaped protrusion can be provided on the light reflector plate, a folding section can be formed at the foot of the mountain-shaped protrusion using the foregoing folding groove part, and additionally, the light reflector plate can be configured such that adhesive tape for shape retention is adhered thereto. In this case, the base material of the adhesive tape preferably has mechanical characteristics preventing the deformation of a light reflector plate which has been formed into a three-dimensional shape. Furthermore, the base material of the adhesive tape preferably has heat-resistant properties of 130ºC. Although the base material of the adhesive tape is not limited, for example, polyester, polyolefin, cyclopolyolefin, polyamide, polyarlate, polycarbonate, polyacetal, polyphenylene ether, polymethylpentene, and liquid crystal polymer are given. Among these, polyester, polypropylene, and cyclopolyolefin are particularly preferable, due to favorable heat-resistance and impact-resistance properties. Furthermore, the adhesive tape is preferably colorless or white. If the adhesive tape is colored in another color, this color may appear on a screen when the light reflector plate is implemented in a liquid crystal display device. The material of the adhesive on the adhesive tape can be selected accordingly, taking into consideration the foregoing points.

### EFFECT OF THE INVENTION

According to the present invention, cracks occurring in a light-reflector plate fabricated by forming a synthetic resin reflector plate in to a three-dimensional shape can be prevented and deformation of this light reflector plate can be prevented effectively, as well. Therefore, in the present invention, cracking and deformation of the light reflector plate can be prevented effectively and warping of the light reflector plate due to an easily deformed section in the light-reflector plate can be prevented by forming all of the folding sections or sections which are easily deformed with the foregoing folding groove parts,.

### BRIEF DESCRIPTION OF THE DRAWINGS

Fig. 1 is a diagram showing a state of processing of the sheet prior to folding;
Fig. 2 is a cross-sectional view of a folding groove part of the sheet in Fig. 1;
Fig. 3 is a perspective view of a light reflector plate using the sheet in Fig. 1;
Fig. 4 is a diagram showing the profile of the light reflector plate in Fig. 3 and the position of the fluorescent light;
Fig. 5 is a rear view of the light reflector plate in Fig. 3;
Fig. 6 is a cross-sectional view of one example of the folding groove part;
Fig. 7 is a cross-sectional view of one example of the folding groove part;
Fig. 8 is a cross-sectional view of one example of the folding groove part;
Fig. 9 is a cross-sectional view of one example of the folding groove part;
Fig. 10 is a cross-sectional view of an example wherein a plurality of light-reflecting sheets are stacked; and
Fig. 11 is a cross-sectional view of an example wherein an aluminum plate is laminated onto one surface of the light-reflective sheet.

### BEST MODE FOR CARRYING OUT THE INVENTION

Next, one example of a light reflector plate according to the present invention is described with reference to the drawings. However, the present invention is not limited to the following example. There is a foamed plastic light reflector sheet (for example, MCPET (registered trademark), manufactured by Furukawa Electric Co., Ltd) with a thickness of 1 mm and bubbles with a bubble diameter of 50µm or less therewithin, which is a thermoplastic polyester extrusion sheet heated and foamed after impregnating with carbon dioxide gas under high pressure. In addition, there is a cyclopolyolefin foamed plastic light reflector film with a thickness of 0.5mm and bubbles with a bubble diameter of 50µm or less therewithin. When these light reflector sheet and film are incorporated as reflector plates for backlight of a liquid crystal display device, the following example can be given as an example for manufacturing a three-dimensional light reflector plate behind the light source of the backlight (for example, fluorescent light).

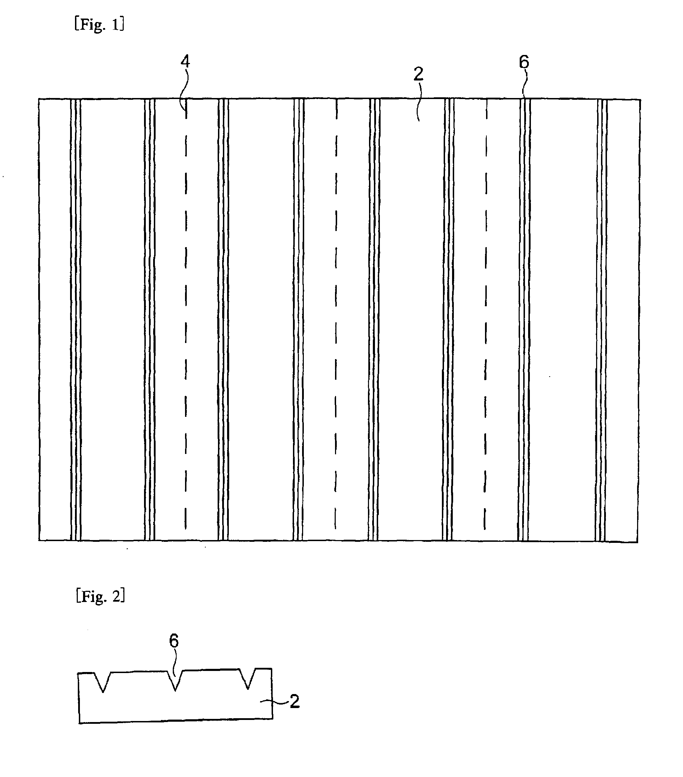

As shown in Fig. 1, linear perforations 4, as well as folding groove parts 6 on both sides of each perforations 4, were formed on a foamed polyethylene terephthalate sheet 2 (foregoing MCPET) which had been foamed by four-fold, with a thickness of 1 mm and a mean bubble diameter of 50µm or less. As shown in Fig. 2, the folding groove part 6 is a groove with a triangular cross-section formed continuously along a straight line on one surface of the foamed sheet 2 through cutting processing.

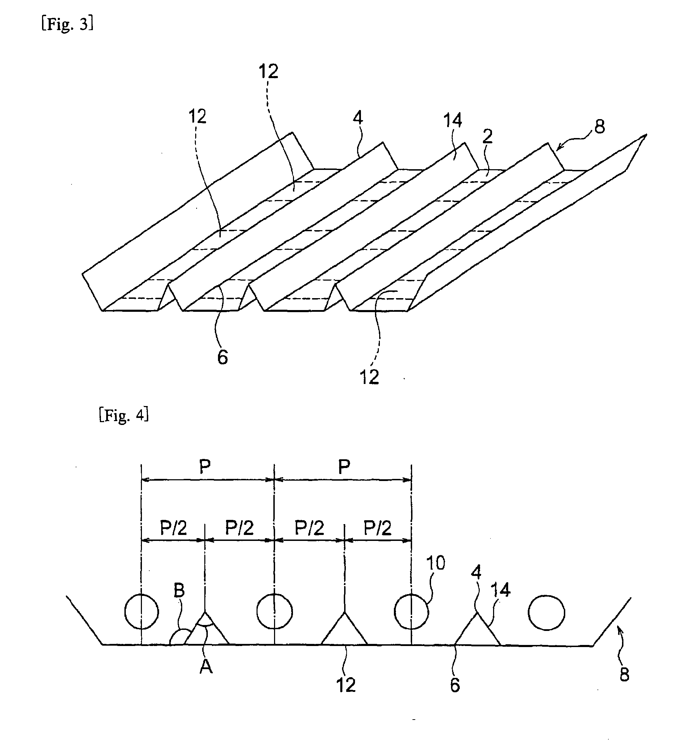

Then, as shown in Fig. 3, a light reflector plate 8 was obtained by folding the foamed sheet 2 along the perforations 4 and the folding groove parts 6, such as to form linear mountain-shapes. The pitch of the folded mountain-shapes is, as shown in Fig. 4, designed such that the peak parts of the mountains are in a position, P/2, almost midway between the light sources 10, according to the pitch P of the light sources 10 of the backlight. Molds were not used in the folding processing and the sheet was folded one mountain at a time using a tool shaped according to the mountain/valley shape.

Next, as shown in Fig. 3 to Fig. 5, three strips of adhesive tape 12, perpendicular to the perforation parts 4 and folding groove parts 6, were adhered on the back surface of the light reflector plate 8 (opposite surface of the light source 10), from one edge part of the light reflector plate 8 in the width direction to the other edge part with predetermined intervals therebetween. In this case, the adhesive tapes 12 were adhered to the light reflector plate 8 such as not to apply tension or sag.

Although, in the light reflector plate of the present example, the shape of the folded section of the peak part of the mountain-shaped protrusion 14 (specifically, the angle A in Fig. 4) is retained by the adhesive tape 12, the shape of the folded section at the foot part (specifically, angle B in Fig. 4) is not retained by the adhesive tape 12, and thus, the entire light reflector plate becomes warped when the angle B changes due to strain and shrinkage. Therefore, in the light reflector plate according to the present example prevents changes due to strain and shrinkage in the foregoing angle B of the folding section and prevents warping of the entire light reflector plate by forming the folding section of the foot part of the mountain-shaped protrusion 14 with the folding groove part 6. Although three strips of adhesive tape were adhered on the reflector plate from one edge part of the reflector plate in the width direction to the other edge part with predetermined intervals therebetween in the present example, the number of strips of adhesive tape and the method of adhering can be set accordingly.

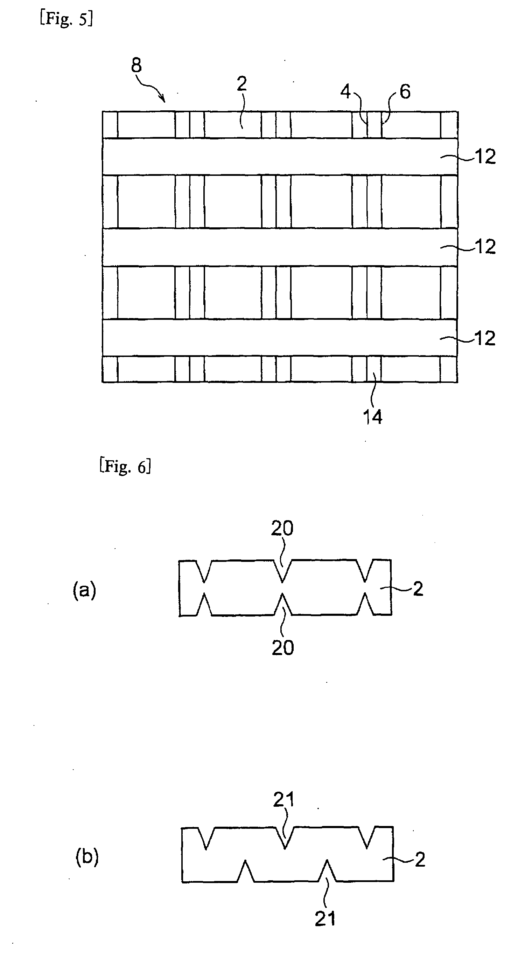

The configuration of the folding groove part of the light reflector plate according to the present invention is not limited to the example in Fig. 2 and can also have the configurations shown in Fig. 6 to Fig. 9, for example. The folding groove part 20 in Fig. 6(a) is a groove with a triangular cross-section, formed intermittently along a straight line on the foamed sheet 2 through cutting processing. In the present example, the folding groove part 20 is provided in the same positions on both sides of the foamed sheet 2. The folding groove part 21 in Fig. 6(b) is a groove with a triangular cross-section, formed continuously along a straight line on the foamed sheet 2 through cutting processing. In the present example, the folding groove part 21 is provided alternately on both surfaces of the foamed sheet 2. The shape of the cross-section of the grooves formed through cutting processing can be selected accordingly, such as linear, triangular, etc.

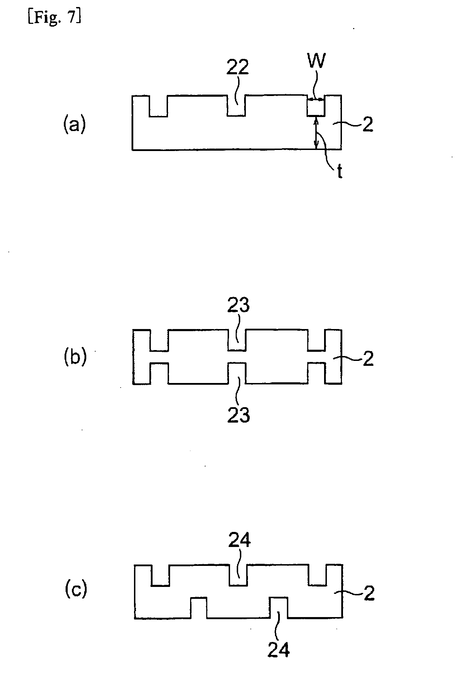

The folding groove part 22 in Fig. 7(a) is a groove with a rectangular cross-section formed intermittently along a straight line on one surface of the foamed sheet 2 through pressing processing. The folding groove part 23 in Fig. 7(b) is a groove with a rectangular cross-section formed continuously along a straight line on the foamed sheet 2 through pressing processing. In the present example, the folding groove part 23 is provided in the same positions on both sides of the foamed sheet 2. The folding groove part 24 in Fig. 7(c) is a groove with a rectangular cross-section formed intermittently along a straight line on the foamed sheet 2 through pressing processing. In the present example, the folding groove part 23 is provided alternately on both surfaces of the foamed sheet 2. The shape of the cross-section of the grooves formed through pressing processing can be selected accordingly, such as rectangular, arch-shaped, etc. It is preferable if the width w of the folding groove part is 0.7 to 1.0mm and the thickness t of the foamed sheet at the section wherein the folding groove part is formed is 0.2 to 0.4mm, because the foamed sheet can be easily bent, and in addition, deformation of the light reflector plate can be effectively prevented.

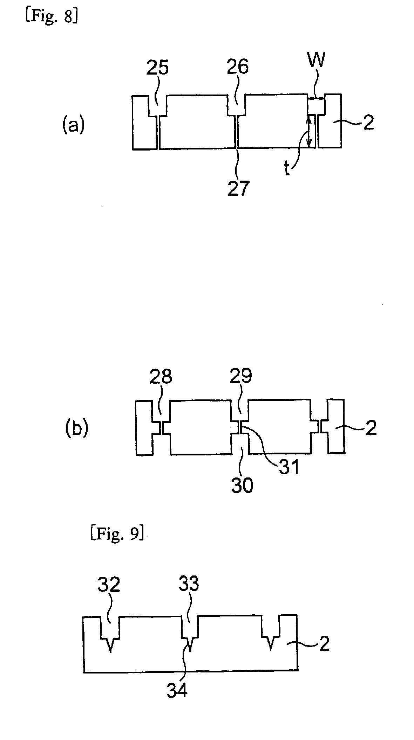

The folding groove part 25 in Fig. 8(a) is formed by continuously forming a groove 26 with a rectangular cross-section along a straight line on one surface of the foamed sheet 2 through pressing processing and furthermore, intermittently forming a cut part 27 along a straight line on the bottom surface of the groove 26 through cutting processing. The folding groove part 28 in Fig. 8(b) is formed by intermittently forming grooves 29 and 30 with rectangular cross-sections along a straight line in the same positions on both surfaces of the foamed sheet 2 through pressing processing, and furthermore, intermittently forming a cut part 31 along a straight line on the bottom surface of the grooves 29 and 30 through cutting processing. The width w of the folding groove part is preferably 0.7 to 1.0mm, and the thickness t of the foamed sheet at the section wherein the folding groove part is formed is preferably 0.2 to 0.4mm. In addition, the length of each cut part formed along a straight line on the bottom surface of the grooves is preferably 10 to 20mm, and the length of the un-cut sections between adjacent cut parts is preferably 5 to 10mm.

The folding groove part 32 in Fig. 9 is formed by continuously forming a groove 33 which a rectangular cross-section along a straight line on one surface of the foamed sheet 2 through pressing processing, and furthermore, intermittently forming a groove 34 with a triangular cross-section along a straight line on the bottom surface of the groove 33 through cutting processing.

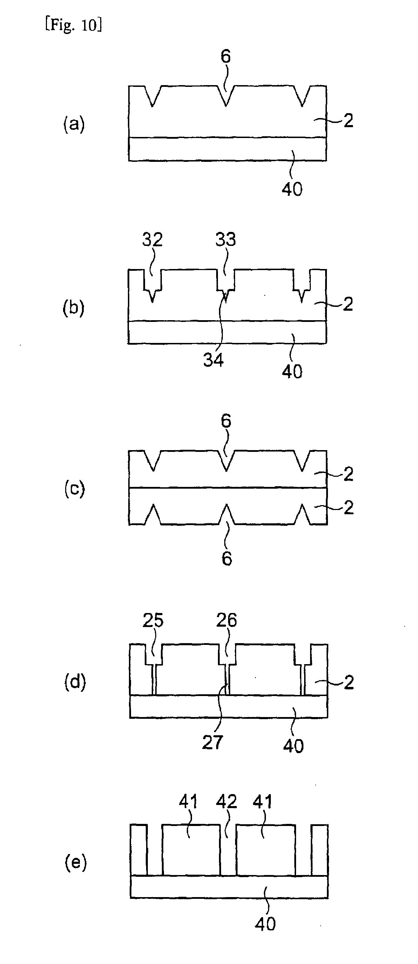

In addition, in the present invention, the light-reflecting plastic film or sheet can be formed by stacking a plurality of light-reflecting plastic films or sheets, as shown in Fig. 10. The sheet in Fig. 10(a) is formed by further laminating a separate foamed sheet 40 onto one surface of the foamed sheet 2 in Fig. 2. The sheet in Fig. 10(b) is formed by further laminating a separate light-reflecting foamed sheet 40 onto one surface of the foamed sheet 2 in Fig. 2. The sheet in Fig. 10(c) is formed by adhering together one surface of the foamed sheets 2 in Fig. 2. The sheet in Fig. 10(d) is formed by further laminating a separate light-reflecting foamed sheet 40 onto one surface of the foamed sheet 2 in Fig. 8(a). The sheet in Fig. 10(e) is formed by adhering a plurality of cutting sheets 41, formed by cutting the foregoing foamed polyethylene terephthalate sheet, with spaces therebetween on one surface of the light-reflecting foamed sheet 40, wherein the folding groove part is a groove 42, with a rectangular cross-section, formed continuously along a straight line between the cutting sheets 41 on one surface of the sheet.

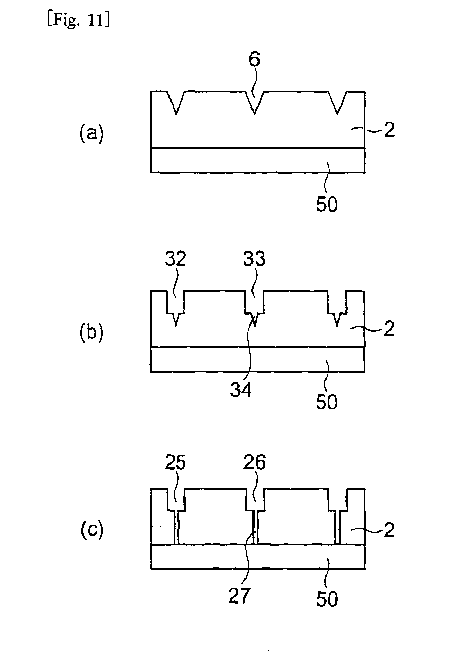

Furthermore, in the present invention, an aluminum plate can be laminated onto one surface of the light-reflecting plastic film or sheet, as shown in Fig. 11. The example in Fig. 11 (a) is that wherein an aluminum plate 50 is laminated onto one surface of the foamed sheet 2 in Fig. 2. The example in Fig. 11 (b) is that wherein the aluminum plate 50 is laminated onto one surface of the foamed sheet 2 in Fig. 9. The example in Fig. 11 (c) is that wherein the aluminum plate 50 is laminated onto the foamed sheet 2 in Fig. 8(a).

## Claims

1. A light reflector plate fabricated by forming a light-reflecting plastic film or sheet into a three-dimensional shape, wherein said film or sheet comprises a folding groove part formed by continuously or intermittently forming a groove along a straight line and is folded along said folding groove part.

2. The light reflector plate according to claim 1, wherein a cut part or a groove is further formed within the groove in said folding groove part.

3. The light reflector plate according to one of claims 1 and 2, wherein said light-reflecting plastic film or sheet is formed by stacking a plurality of light-reflecting plastic films or sheets.

4. The light reflector plate according to any one of claims 1 to 3, wherein an aluminum plate is laminated onto one surface of said light-reflecting plastic film or sheet.

5. The light reflector plate according to any one of claims 1 to 4, wherein said light-reflecting plastic film or sheet is a thermoplastic resin film or sheet having numerous fine bubbles or pores with a mean bubble diameter of 50*µ*m therewithin.

6. The light reflector plate according to any one of claims 1 to 4, wherein said light-reflecting plastic film or sheet is a thermoplastic resin film or sheet containing fillers, wherein numerous voids are formed with said filler as the core.

7. The light reflector plate according to any one of claims 1 to 6 having a mountain-shaped protrusion, wherein at least the folded section at the foot part is formed by folding said film or sheet along said folding groove part and an adhesive tape for shape-retention is adhered to said light reflector plate.
